Europäisches Patentamt

European Patent Office

Office européen des brevets

(19)

(11) Numéro de publication : **0 336 867 B1**

# (12) FASCICULE DE BREVET EUROPEEN

(45) Date de publication du fascicule du brevet :
**29.01.92 Bulletin 92/05**

(51) Int. Cl.⁵ : **F16L 59/16, F16L 33/26**

(21) Numéro de dépôt : **89460010.5**

(22) Date de dépôt : **22.03.89**

(54) Raccord de conduits métalliques flexibles, en particulier de conduits de fumée isolés.

(30) Priorité : **06.04.88 FR 8804742**
**20.05.88 FR 8806987**

(43) Date de publication de la demande :
**11.10.89 Bulletin 89/41**

(45) Mention de la délivrance du brevet :
**29.01.92 Bulletin 92/05**

(84) Etats contractants désignés :
**AT BE CH DE ES FR GB GR IT LI LU NL SE**

(56) Documents cités :
**CH-A- 513 354**
**DE-A- 2 705 742**
**DE-U- 1 879 023**
**FR-A- 2 518 213**
**FR-A- 2 588 357**

(73) Titulaire : **Joncoux, Gérard Lucien**
**10, rue Henri Sée**
**F-35000 Rennes (FR)**

(72) Inventeur : **Joncoux, Gérard Lucien**
**10, rue Henri Sée**
**F-35000 Rennes (FR)**

(74) Mandataire : **Le Guen, Louis François**
**CABINET Louis LE GUEN 38, rue Levavasseur**
**B.P. 91**
**F-35802 Dinard Cédex (FR)**

EP 0 336 867 B1

Jouve, 18, rue Saint-Denis, 75001 PARIS

**Description**

La présente invention concerne un raccord de conduits métalliques flexibles, formé d'un embout mâle et d'un embout femelle respectivement fixés sur les bouts des conduits métalliques flexibles à relier. Plus particulièrement, l'invention s'applique à des raccords pour conduits de fumée métalliques, souples et isolés thermiquement.

Dans l'état actuel de la technique, les conduits de fumée isolés thermiquement se présentent sous deux formes :

— les conduits isolés réalisés en éléments rigides de longueur fixe emboîtables les uns dans les autres, donc simples à raccorder, mais nécessitant l'emploi de coudes d'ouverture fixe pour réaliser des dévoiements du conduit,

— des conduits isolés souples réalisés à partir de tuyaux métalliques flexibles intérieur et extérieur entre lesquels est disposé un isolant qui est lui-même souple, ces conduits souples permettant de réaliser facilement des dévoiements du conduit.

Les tuyaux métalliques flexibles sont chacun constitués d'une bande de métal ondulée longitudinalement et enroulée en hélice. De tels tuyaux ne sont pas directement emboîtables les uns dans les autres. C'est pourquoi jusqu'ici, quand on voulait, par exemple, réaliser un conduit de fumée avec de tels tuyaux, il était nécessaire de le fabriquer en une seule longueur. Autrement dit, les conduits souples étaient fabriqués à la demande à la longueur désirée pour garantir la continuité du bas en haut du conduit. Ces conduits, faits sur mesure, sont mal adaptés à un processus de fabrication industrielle. Par ailleurs, ils peuvent être longs et, donc, difficiles à transporter, en nécessitant éventuellement des moyens de transport spéciaux. Enfin, ils sont difficiles à mettre en oeuvre sur le site à cause de leur volume et leur encombrement.

Un objet de la présente invention consiste à prévoir un raccord permettant de relier, par emboîtement, bout à bout des sections de conduits flexibles. Il devient alors possible de prévoir, pour les conduits flexibles, des gammes de longueurs, chaque tuyau comportant, à un bout, un embout mâle et, à l'autre bout, un embout femelle, le raccord formé par l'embout mâle d'un conduit emboîté dans l'embout femelle d'un autre tuyau étant étanche aux fumées et, de préférence, rendu indissociable par une bride.

Un autre objet de l'invention est de prévoir un raccord tel que défini ci-dessus et qui comporte des moyens supplémentaires suffisants pour que l'installateur puisse être certain qu'il est étanche à la fumée.

Les objets de la présente invention sont atteints par la mise en oeuvre de raccords de conduits de fumée isolés définis dans les revendications ci-annexées.

Les caractéristiques de l'invention apparaîtront plus clairement à la lecture de la description suivante d'un exemple de réalisation, ladite description étant faite en relation avec les dessins joints, parmi lesquels :

la Fig. 1 est une vue en coupe longitudinale d'un embout mâle de raccord de conduits de fumée souples isolés thermiquement, suivant l'invention,

la Fig. 2 est une vue en coupe longitudinale d'un embout femelle formant avec l'embout mâle de la Fig. 1, un raccord suivant l'invention,

la Fig. 3 est une vue en coupe longitudinale du raccord suivant l'invention, les embouts mâle et femelle des Figs. 1 et 2 étant presque assemblés,

la Fig. 4 est une vue partielle en coupe à plus grande échelle du collier de verrouillage monté sur les embouts mâle et femelle des Figs. 1 et 2 en position assemblés,

la Fig. 5 est une vue en coupe longitudinale d'une variante d'un embout mâle de raccord de conduite de fumée souples isolés thermiquement, suivant l'invention,

la Fig. 6 est une vue en coupe longitudinale d'une variante d'un embout femelle formant avec l'embout mâle de la Fig. 1 un raccord, suivant l'invention,

la Fig. 7 est une vue en coupe longitudinale du raccord suivant l'invention, les embouts mâle et femelle des Figs. 5 et 6 étant assemblés, et

la Fig. 8 est une vue partielle en coupe illustrant l'assemblage des embouts mâle et femelle des Figs. 5 et 6.

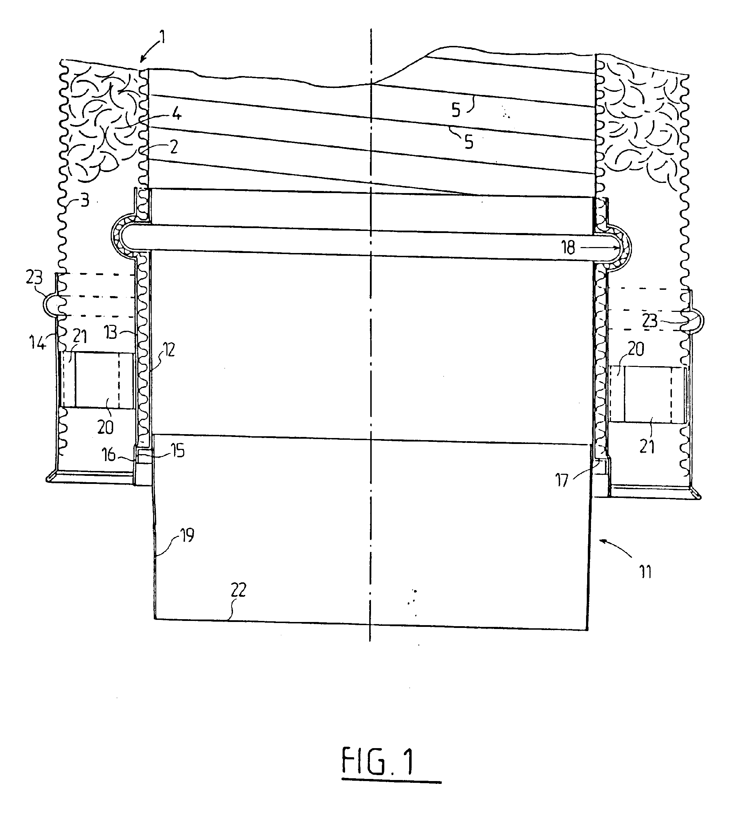

A la Fig. 1, on a montré l'extrémité d'un conduit souple isolé 1 formé d'un tuyau métallique flexible interne 2 et d'un tuyau métallique flexible externe 3, avec, entre eux, un isolant souple 4. De plus, le tuyau interne 2 est revêtu intérieurement de lames hélicoïdales 5 si bien que la surface interne du conduit est lisse. La structure d'un conduit de ce type est décrite dans le brevet FR-A-2518213.

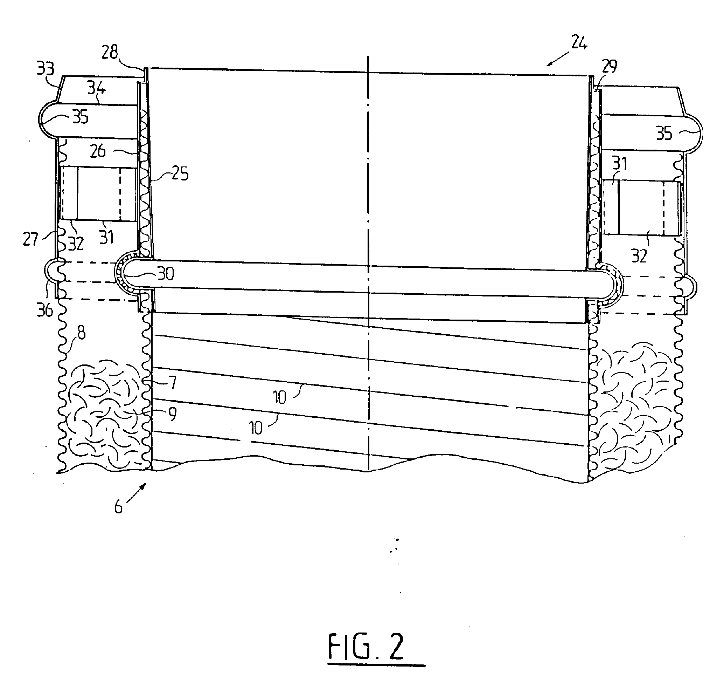

A la Fig. 2, on a montré l'extrémité d'un autre conduit souple isolé 6 du même type et de mêmes dimensions que le conduit 1. Il comporte un tuyau interne 7, un tuyau externe 8, de l'isolant 9 et des lames internes 10. Pour une raison qui apparaîtra clairement dans la suite, l'isolant 4 et 9 a été montré partiellement retiré des extrémités des conduits 1 et 6.

A la Fig. 1, le conduit 1 est muni d'un embout mâle 11 qui comprend une virole cylindrique 12 dont le diamètre extérieur est égal au diamètre intérieur de la surface lisse du tuyau 2, une virole 13 dont le diamètre intérieur est égal au diamètre extérieur maximal du tuyau 2, et une virole 14 dont le diamètre est égal au diamètre extérieur maximal du tuyau 3. L'extrémité inférieure 15 de la virole 12 a son diamètre agrandi pour atteindre intérieurement le diamètre extérieur de la virole 13. De même, l'extrémité inférieure 16 de la virole 13 a son diamètre agrandi pour recouvrir l'extrémité inférieure de la virole 12 et descend un peu au-dessous de celle-ci. Les surfaces cylindriques adjacentes des parties 15 et 16 des viroles 12 et 13 sont soudées de manière à rendre les viroles solidaires. Ainsi, les viroles 12 et 13 forment un manchon fermé en bas par un anneau 17 constitué par la partie reliant la partie principale de la virole 12 à son extrémité inférieure de plus grand diamètre. Le manchon s'enfile sur le bout du tuyau 2 et la partie haute du manchon est sertie, en 18, sur le tuyau 2, par des moyens connus, tels qu'une mollette, etc. Le sertissage, en 18, assure la fixation du manchon 12-13 sur le tuyau 2 ainsi que l'étanchéité entre l'intérieur de la virole 12 et l'extérieur du tuyau 2.

Le manchon 12-13 est complété par une virole 19, présentant une faible conicité, dont la partie à grand diamètre a sa surface externe soudée à la face interne du bord de la virole 12. Ainsi, la virole conique 19 est en saillie en dehors du manchon 12-13 et constitue une partie mâle.

La virole 13 est pourvue, sur sa face externe, d'un certain nombre de pattes 20 à section transversale en équerre, dont un bras relativement long est radial et dont l'autre bras court est soudé à la virole 13.

En face des pattes 20, sont respectivement prévues des pattes 21, également à section transversale en équerre, qui ont un bras relativement long orienté radialement vers l'intérieur et un bras court soudé à la face interne du tuyau 3. En fait le tuyau 3 est pris et écrasé entre le bras court de la patte 21 et la face interne de la virole 14, l'ensemble étant soudé par points.

L'extrémité libre 22 de la virole 14 est évasée, le bord étant replié pour lui donner de la rigidité. Près de l'autre extrémité de la virole 14, est formé un bossage circulaire 23 qui assure la rigidité de cette partie de la virole 14.

Pour réaliser un conduit muni de l'embout mâle 11, on commence par monter le manchon 12-13, muni de la virole 19 et des pattes 20, sur le tuyau 2. Ensuite, on enroule l'isolant souple 4, sous forme de fibres isolantes longues, autour du tuyau 2 et, au moins partiellement, du manchon 12-13. Puis, on enfile le tuyau 3 sur l'isolant 4 et on fixe la virole 14 sur l'extrémité correspondante du tuyau 3. On place alors, une par une, les pattes 22 à l'intérieur du tuyau 3 et on soude, à un endroit prédéterminé, le sandwich 14-3-21. Une fois, toutes les pattes 20 soudées, on les ajuste en face des pattes 21 et on soude par points chaque couple de pattes. La concentricité de l'ensemble de l'embout 11 est alors assurée.

A la Fig. 2, le conduit 6 est muni d'un embout femelle 24 qui comprend une virole légèrement conique 25 dont le diamètre extérieur minimal est égal au diamètre intérieur de la surface lisse du tuyau 7, une virole cylindrique 26 dont le diamètre est égal au diamètre extérieur maximal du tuyau 7, et une virole 27 dont le diamètre est égal au diamètre extérieur maximal du tuyau 8. La partie supérieure 28 de la virole 26 a son diamètre rétréci pour atteindre le diamètre maximal du bord externe de la virole 25. Les surfaces coniques adjacentes de la partie 28 et de la virole 25 sont soudées de manière à rendre les viroles solidaires et qu'elles forment un manchon fermé, en haut, par un anneau 29 constitué par la partie horizontale formée lors du rétrécissement de diamètre de la virole 26. Le manchon s'enfile sur le tuyau interne 7 et la partie basse du manchon est sertie, en 30, sur le tuyau 7, comme pour le manchon 12-13. Ce sertissage assure à la fois la fixation du manchon et l'étanchéité.

La conicité de la virole 25 est la même que celle de la virole 19. En pratique, la virole 19 constitue la partie mâle de l'embout 11 et est prévue pour entrer dans la virole 25 qui constitue une partie femelle.

La virole 26 est pourvue, sur sa face externe, d'une certain nombre de pattes 31, semblables aux pattes 20 et montées de la même façon.

En face des pattes 30, sont prévues des pattes 31, semblables aux pattes 21 et montées de la même façon que celles-ci en prenant en sandwich le tuyau 8 entre elles-mêmes et la virole 27.

L'extrémité libre 33 a une forme conique convergente vers le haut. Entre le grand cercle de base 34 de cette partie 33 et la partie principale de la virole 27, est prévue un bossage circulaire 35 en saillie vers l'extérieur. Près de l'autre extrémité de la virole 27, est formé un bossage circulaire 36 qui assure la rigidité de cette partie de la virole.

Pour réaliser un conduit muni de l'embout femelle 24, on agit d'une manière tout à fait semblable à ce qui a été prévu pour la pose du manchon mâle 11.

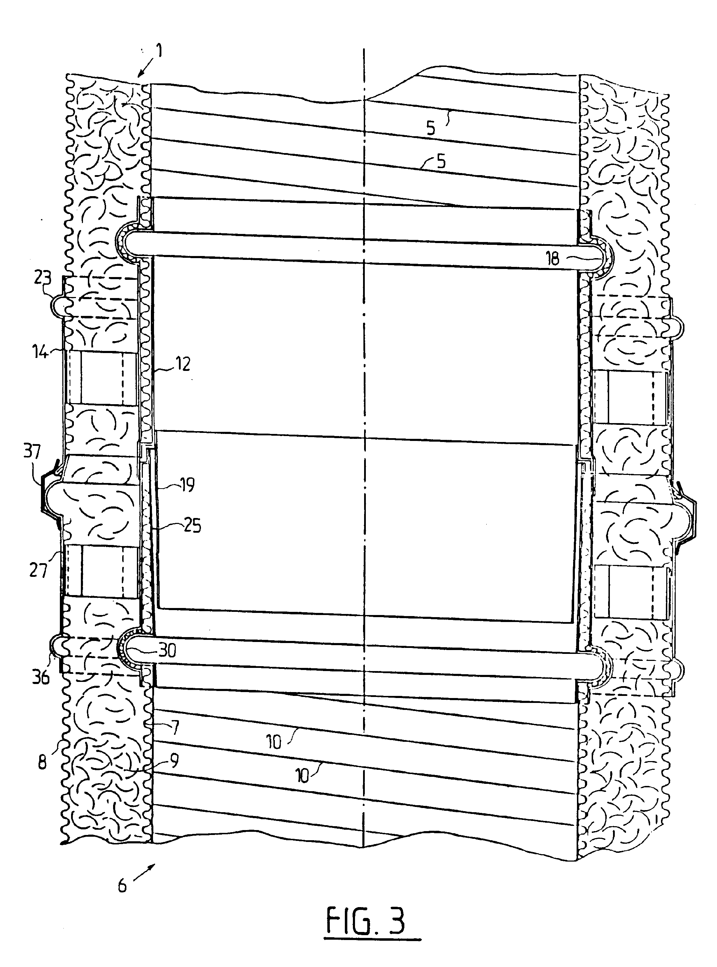

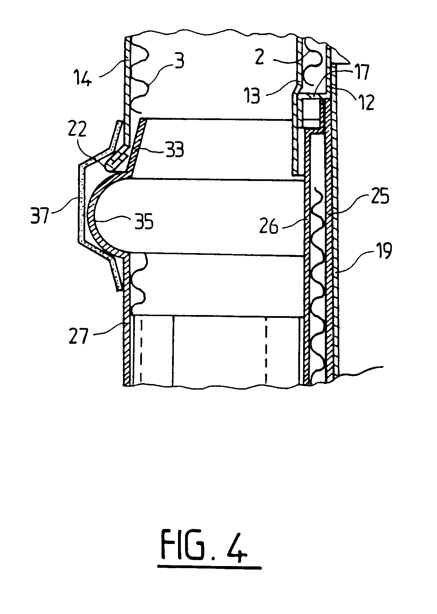

Comme le montrent les Figs. 3 et 4, qui représentent comment les embouts 11 et 24 s'emboîtent, on engage la virole conique mâle 19 dans la virole conique femelle 25 dont le bord 28 vient se placer entre les bouts 15 et 16, d'une part, et la virole 19, d'autre part, et vient en butée contre l'anneau 17. Par ailleurs, le rebord évasé 22 vient, le long du bout conique 23, en butée contre le bord du bossage 35. Avant de réaliser cette insertion, on a pris soin de remplacer, dans les embouts, l'isolant 4 qui avait été enlevé pour souder les pattes 21 et 32.

On place ensuite autour des parties 35 et 22, un collier 37 de section adéquate afin d'éviter un désemboîtement intempestif des manchons mâle et femelle. Le collier 37 peut, par exemple, être serré au moyen d'un système à grenouillère, non montré.

Il faut encore noter que les viroles 12 et 19 peuvent être en une seule pièce, sans solution de continuité, au lieu de deux.

Par ailleurs, on peut prévoir, au lieu de fabriquer les manchons avant de les enfiler sur les extrémités des tubes internes 2 ou 7 et de les y fixer, de fixer d'abord la partie intérieure du manchon, c'est-à-dire 12 (ou 12-9) et 25, contre la face intérieure du tube interne correspondant, par exemple par soudure par points, puis de compléter chaque manchon en enfilant sur le tube interne la virole extérieure 13 ou 26, avec son anneau 17 ou 29, ces viroles portant leurs portions d'entretoises, comme on l'a mentionné plus haut.

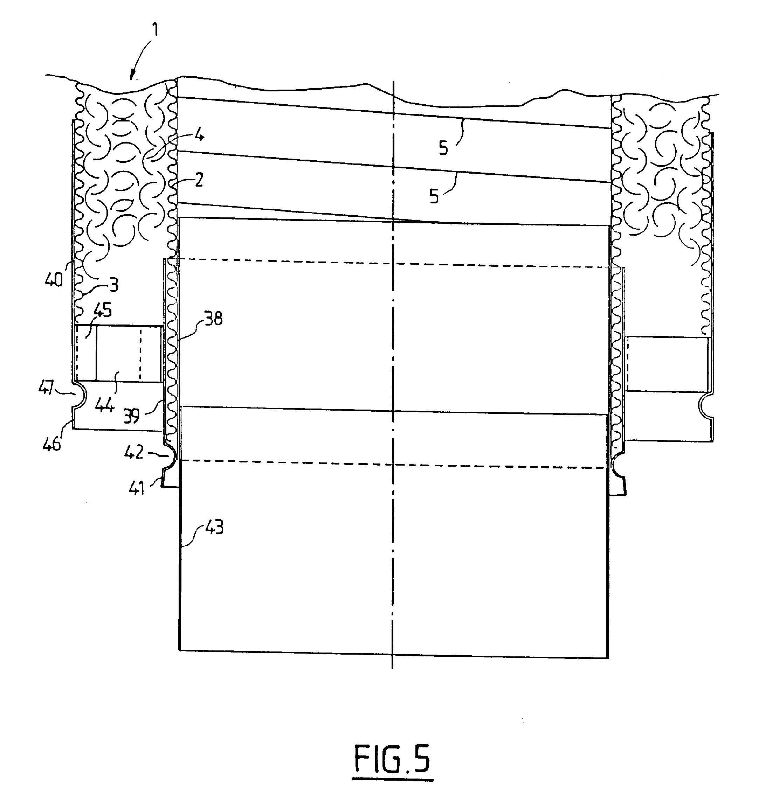

A la Fig. 5, on a de nouveau montré l'extrémité d'un conduit souple isolé 1 formé d'un tuyau métallique flexible interne 2 et d'un tuyau métallique flexible externe 3, avec, entre eux, un isolant souple 4. Le tuyau interne 2 est aussi revêtu intérieurement de lames hélicoïdales 5 si bien que la surface interne du conduit est lisse.

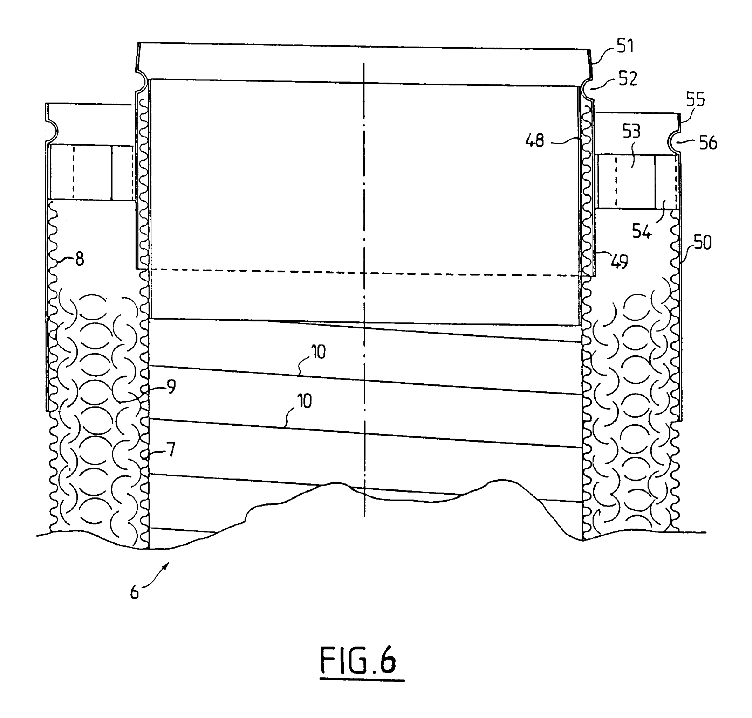

A la Fig. 6, on a encore montré l'extrémité d'un autre conduit souple isolé 6 du même type et de mêmes dimensions que le conduit 1 de la Fig. 5. Il comporte un tuyau interne 7, un tuyau externe 8, de l'isolant 9 et des lames internes 10. Pour une raison qui apparaîtra clairement dans la suite, les isolants 4 et 9 ont été montrés partiellement retirés des extrémités des conduits 1 et 6.

A la Fig. 5, le conduit 1 est muni d'un embout mâle qui comprend une virole cylindrique 38 dont le diamètre extérieur est égal au diamètre intérieur de la surface libre du tuyau 2, une virole 39 dont le diamètre intérieur est égal au diamètre extérieur maximal du tuyau 2, et une virole 40 dont le diamètre est égal au diamètre extérieur maximal du tuyau 3. Près de l'extrémité inférieure 41 de la virole 39, celle-ci présente une gorge circulaire 42 dont le fond est soudé à la surface externe de l'extrémité inférieure de la virole 38. Ainsi, les viroles 38 et 39 forment un manchon fermé en bas par un anneau en forme de quart de tore. Le manchon s'enfile sur le bout du tuyau 2 et en est rendu solidaire par un moyen de fixation approprié qui assure l'étanchéité entre l'intérieur de la virole 38 et l'extérieur du tuyau 2. L'extrémité 41 est, au-delà de la gorge 42, légèrement évasée.

Le manchon 38-39 est complété par une virole 43 présentant une faible conicité dont la partie à grand diamètre a sa surface interne soudée à la face interne du bord de la virole 38. Ainsi, la virole conique 43 est en saillie en dehors du manchon 38-40 et constitue une partie mâle.

La virole 39 est pourvue, sur sa face externe, d'un certain nombre de pattes 44 à section transversale en équerre, dont un bras est radial et l'autre est soudé à la virole 39.

En face des pattes 44, sont respectivement prévues des pattes 45, également à section transversale en équerre, dont un bras est orienté radialement vers l'intérieur et l'autre soudé à la face interne du tuyau 3. En fait, le tuyau 3 est pris et écrasé entre le bras court de la patte 45 et la face interne de la virole 40, l'ensemble étant soudé par points.

Près de l'extrémité inférieure 46 de la virole 40, celle-ci présente une gorge circulaire 47, ouverte vers l'extérieur. Le bord circulaire de l'extrémité 46 est, en regardant la Fig. 1, dans un plan situé au-dessus du plan qui contient le bord supérieur de la gorge circulaire 47.

Pour réaliser un conduit muni de l'embout mâle, on commence par monter le manchon 38-39, muni de la virole 43 et des pattes 44, sur le tuyau 2. Ensuite on enroule l'isolant souple 4, sous forme de fibres isolantes longues, autour du tuyau 2 et, au moins partiellement, du manchon 38-39. Puis, on enfile le tuyau 3 sur l'isolant 4 et on fixe la virole 40 sur l'extrémité correspondante du tuyau 3. On place alors, une par une, les pattes 45 à l'intérieur du tuyau 3 et on soude, à un endroit prédéterminé, le sandwich 40-3-45. Une fois toutes les pattes 45 soudées, on les ajuste en face des pattes 44 et on soude par points chaque couple de pattes. La concentricité de l'embout mâle est alors assurée.

A la Fig. 6, le conduit 6 est muni d'un embout femelle qui comprend une virole légèrement conique 48 dont le diamètre extérieur minimal est égal au diamètre intérieur de la surface lisse du tuyau 7, une virole cylindrique 49 dont le diamètre est égal au diamètre extérieur maximal du tuyau 7, et une virole 50 dont le diamètre est égal au diamètre extérieur maximal du tuyau 8. Près de la partie supérieure 51 de la virole 49, celle-ci présente une gorge circulaire 52 dont le fond est soudé à la surface externe de l'extrémité supérieure de la virole 48. Ainsi, les viroles 48 et 49 forment un manchon fermé en haut par un anneau de quart de tore. Le manchon s'enfile sur le bout du tuyau 7 et en est rendu solidaire par un moyen de fixation approprié qui assure l'étanchéité entre l'intérieur de la virole 48 et l'extérieur du tuyau 7. L'extrémité 51, est, au-delà de la gorge 52, légèrement conique pour former une partie mâle, qui est destinée à s'adapter dans la partie femelle formée par l'extrémité évasée 41 de la virole 38 de l'embout mâle.

La virole 43 de l'embout mâle a la même conicité que la virole 48 de l'embout femelle et est prévue pour s'adapter dans cette virole 48.

La virole 49 est pourvue, sur sa face externe, d'un certain nombre de pattes 53, semblables aux pattes 44 et montées de la même façon. En face des pattes 53, sont prévues des pattes 54, semblables aux pattes 45 et montées de la même façon que celles-ci en prenant en sandwich le tuyau 8 entre elles-mêmes et la virole 50.

Près de l'extrémité supérieure 55 de la virole 50, celle-ci présente une gorge circulaire 56, ouverte vers l'extérieur. Le bord circulaire de l'extrémité 55 est dans le plan situé au-dessous du plan contenant le bord supérieur de la gorge circulaire 56.

Pour réaliser un conduit muni de l'embout femelle, on agit d'une manière tout à fait semblable à ce qui a été prévu pour la pose du manchon mâle.

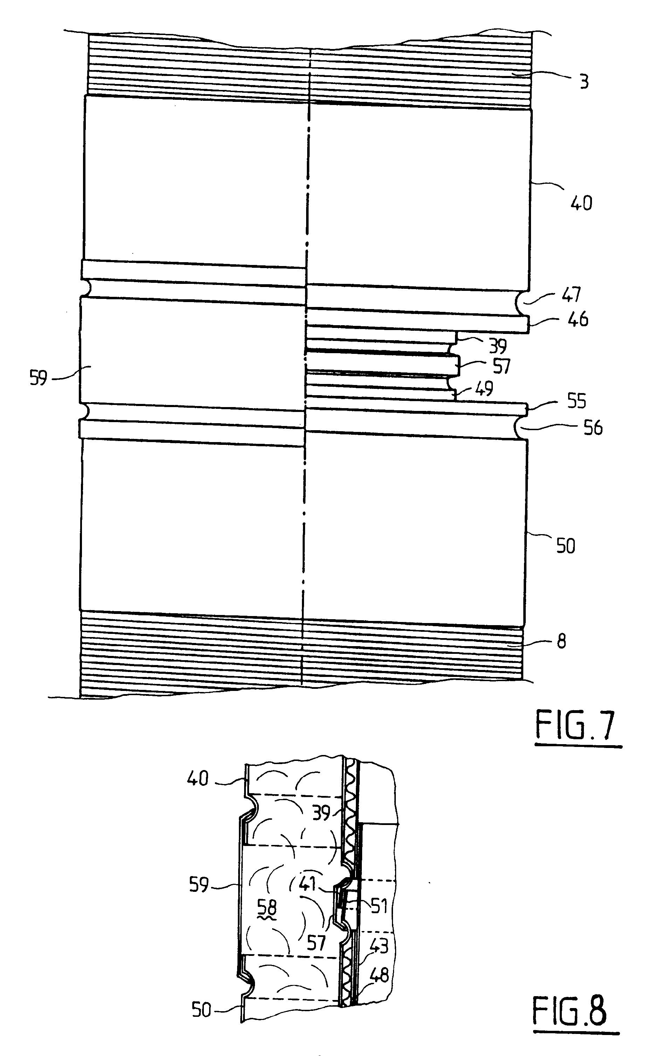

Comme le montrent les Figs. 7 et 8 qui illustrent comment les embouts mâle et femelle s'emboîtent, on engage la virole conique mâle 43 dans la virole femelle 48, tandis que l'extrémité mâle 51 s'engage dans l'extrémité femelle 41, ce qui assure un bon centrage. Les bords circulaires des viroles 40 et 50 laissent entre eux un espace suffisant pour accéder aux viroles 39 et 49. On place alors, sur les extrémités superposées des viroles 39 et 49, un collier 57 ou une bride d'assemblage dont les bords entrent respectivement dans les gorges 42 et 52, ce qui assure un blocage étanche et fiable des embouts l'un dans l'autre.

L'opération suivant consiste à placer autour des parties dénudées des embouts de l'isolant 58. Enfin, on relie les viroles externes 40 et 50 par un collier ou une bride d'assemblage 59 dont les bords chevauchent respectivement leurs gorges circulaires 47 et 56.

**Revendications**

1. Raccord de conduits de fumée isolés, métalliques et flexibles, à tuyau métallique flexible interne (2) et tuyau métallique flexible externe (3), formé d'embouts mâles et d'embouts femelles, respectivement fixés sur les bouts des conduits de fumée isolés à relier, caractérisé en ce que l'embout mâle interne comprend un premier manchon (38) formé d'une première virole métallique (12) de diamètre égal au diamètre intérieur d'un tube métallique flexible interne (2) et d'une seconde virole métallique (13) concentrique à la première virole (12) et dont le diamètre est égal au diamètre extérieur du tube métallique flexible interne (2), les première et seconde viroles (12, 13) étant, à leurs extrémités tournées vers l'embout femelle, rendues solidaires l'une de l'autre par un premier anneau circulaire, des moyens étant prévus pour fixer l'extrémité correspondante dudit tube dans le premier manchon, l'embout mâle étant complété par une troisième virole (19) à légère conicité convergente prolongeant la première virole (12) vers l'extérieur, dont l'embout femelle interne comprend un second manchon formé d'une quatrième virole (25) de même conicité que la troisième virole (19), mais divergente, dont le diamètre minimal est égal au diamètre intérieur du tuyau métallique flexible interne (7) et d'une cinquième virole (26) dont le diamètre est égal au diamètre extérieur du tuyau métallique flexible interne (7), les quatrième et cinquième viroles (25, 26) étant, à leurs extrémités tournées vers l'embout mâle, rendues solidaires l'une de l'autre par un second anneau circulaire (29), et des moyens étant prévus pour fixer l'extrémité correspondante du tuyau (7) dans le second manchon, des sixième et septième viroles (14, 27) à diamètre égal au diamètre extérieur des tuyaux externes (3, 8) étant respectivement emboîtées sur les extrémités des tuyaux externes (3, 8) et fixées à celles-ci, la seconde et la sixième viroles (13, 14) étant concentriques et reliées par des entretoises (20, 21), et la cinquième et la septième virole (26, 27) étant concentriques et reliées par des entretoises (31, 32).

2. Raccord suivant la revendication 1, caractérisé en ce que la sixième virole (14) a son bord libre (32) en forme de cône divergent sur une courte longueur et la septième virole (27) a son bord libre (33) en forme de cône convergent, également sur une courte longueur, un bossage circulaire (35) étant prévu sur la septième virole (27) derrière la partie conique (33), des moyens de verrouillage étant constitués par un collier circulaire (37) maintenant rapprochés l'arrière dudit bossage (35) de la septième virole (27) et la surface du cône externe divergent (22) qui est appliqué sur la surface externe du cône convergent (33).

3. Raccord suivant la revendication 1 ou 2, caractérisé en ce que des moyens de fixation sont prévus entre lesdits premier et second manchons pour les rendre indissociables.

4. Raccord suivant la revendication 3, caractérisé en ce que ledit premier anneau circulaire est constitué par la surface externe d'une première gorge circulaire (42), ouverte vers l'extérieur, près de l'extrémité (41) de la seconde virole (39), la surface de la gorge (42) adjacente à la première virole (38) étant soudée à celle-ci, et ledit second anneau circulaire est constitué par la surface externe d'une seconde gorge circulaire (52), ouverte vers l'extérieur près de l'extrémité (51) de la cinquième virole (49), la surface de la gorge (52) adjacente à la quatrième virole (48) étant soudée à celle-ci.

5. Raccord suivant la revendication 4, caractérisé en ce que lesdits moyens de fixation sont constitués par un collier d'assemblage (57) dont les bords s'engagent respectivement dans lesdites première (42) et seconde (52) gorges circulaires.

6. Raccord suivant la revendication 4 ou 5, caractérisé en ce qu'au-delà de la première gorge circulaire (42), l'extrémité (41) de la seconde virole (39) est légèrement conique pour former une partie femelle et en ce qu'au-delà de la seconde gorge circulaire (52), l'extrémité (51) de la cinquième virole (49) est légèrement conique pour former une partie mâle qui s'adapte dans ladite partie femelle de la seconde virole (39).

7. Raccord de conduit flexible isolé à tubes métalliques flexibles interne et externe, suivant l'une des revendications 3 à 6, dans lequel lesdits premier et second manchons sont respectivement complétés par des sixième (40) et septième (50) viroles à diamètre égal au diamètre extérieur des tubes externes (3, 8), qui sont respectivement emboîtées sur les extrémités des tubes externes (3, 8) et fixées à celui-ci, les seconde (39) et sixième (40) viroles étant concentriques et reliées par des entretoises (44, 45), et les cinquième (49) et septième viroles (50) étant concentriques et reliées par des entretoises (53, 54), caractérisé en ce que les extrémités libres des sixième (40) et septième (50) viroles sont dans des plans transversaux qui coupent respectivement les seconde (39) et cinquième (49) viroles en-deçà des première (42) et seconde (52) gorges circulaires, des moyens de fixation étant prévus pour rendre solidaires les sixième et septième viroles.

8. Raccord suivant la revendication 7, caractérisé en ce que lesdits moyens de fixation sont un second collier d'assemblage (59) dont les bords s'engagent respectivement dans des troisième (47) et quatrième (56) gorges circulaires, ouvertes vers l'extérieur, respectivement prévues près des extrémités desdites sixième (40) et septième (50) viroles.

9. Raccord suivant la revendication 1 ou 2, caractérisé en ce qu'à la jonction des entretoises (20, 21 ou 31, 32) et respectivement des sixième et septième viroles (14 ou 27), les tuyaux métalliques flexibles (3 ou 8) sont écrasés entre les pieds des entretoises et lesdites viroles.

10. Raccord suivant l'une des revendications 1 à 9, caractérisé en ce que les première et troisième viroles (12 et 19) sont en une seule pièce.

## Patentansprüche

1. Isolierte, metallische und flexible Rauchleitungsverbindung mit einem inneren, flexiblen Metallrohr (2) und einem äußeren, flexiblen Metallrohr (3), welche von einsteckbaren und aufnehmenden Ringebeschlägen jeweils gebildet werden, welche fest an den Enden der zu verbindenden, isolierten Rauchleitungen angebracht sind, dadurch **gekennzeichnet,** daß der innere, einsteckbare Ringbeschlag eine erste Hülse (38) aufweist, welche von einem ersten Metallmantel (12) mit einem Durchmesser gebildet wird, welcher gleich dem Innendurchmesser eines inneren, flexiblen Metallrohrs (2) ist, und einem zweiten Metallmantel (13) gebildet wird, welcher konzentrisch zum ersten Mantel (12) angeordnet ist und einen Durchmesser hat, welcher gleich dem Außendurchmesser des inneren, flexiblen Rohres (2) ist, daß die ersten und zweiten Mäntel (12, 13) an ihren Enden in Richtung auf den aufnehmenden Ringbeschlag zur Bildung einer integralen Einheit mittels eines ersten kreisförmigen Rings gebogen sind, eine Einrichtung zum Festlegen des zugeordneten Endes des Rohres in der ersten Hülse vorgesehen ist, der einsteckbare Ringbeschlag durch einen dritten Mantel (19) mit geringfügig konvergierender Konizität vervollständigt ist, welcher den ersten Mantel (12) zur Außenseite hin verlängert, der innere, aufnehmende Ringbeschlag eine zweite Hülse aufweist, die von einem vierten Mantel (25) mit gleicher Konizität wie der dritte Mantel (19) aber mit konvergierendem Verlauf gebildet wird, dessen kleinster Durchmesser gleich dem Innendurchmesser des inneren, flexiblen Metallrohres (7) ist, und einem fünften Mantel (26) gebildet wird, dessen Durchmesser gleich dem Außendurchmesser des inneren, flexiblen Rohres (7) ist, die vierten und fünften Mäntel (25, 26) an ihren Enden in Richtung auf den einsteckbaren Ringbeschlag zur Bildung einer integralen Einheit miteinander mittels eines zweiten, kreisförmigen Ringes (29) gekrümmt sind, und daß eine Einrichtung zum Festlegen des zugeordneten Endes des Rohres (7) in der zweiten Hülse vorgesehen ist, wobei sechste und siebente Mäntel (14, 27) mit einem Durchmesser gleich dem Außendurchmesser der äußeren Rohre (3, 8) jeweils passend an den Enden der äußeren Rohre (3, 8) vorgesehen und fest mit den letztgenannten verbunden sind, die zweiten und sechsten Mäntel (13, 14) konzentrisch und durch Querstücke (20, 21) verbunden sind und wobei die fünften und die siebenten Mäntel (26, 27) konzentrisch und mittels Querstücken (31, 32) verbunden sind.

2. Verbindung nach Anspruch 1, dadurch **gekennzeichnet,** daß der sechste Mantel (14) einen freien Rand (32) in Form eines Konus hat, welcher über eine kurze Längserstreckung einen divergierenden Verlauf hat, der siebente Mantel (27) einen freien Rand (33) in Form eines Konus hat, der in ähnlicher Weise über eine kurze Längserstreckung einen konvergierenden Verlauf hat, ein Ringvorsprung (35) auf dem siebenten Mantel (27) hinter dem konischen Teil (33) vorgesehen ist, und daß eine Verriegelungseinrichtung von einem kreisförmigen Bund (37) gebildet wird, welcher die Rückseite des Vorsprungs (35) des siebenten Mantels (27) und die Fläche des divergierenden, äußeren Konus (22) im Anlagezustand zusammenhält, welcher auf die äußere Fläche des konvergierenden Konus (33) aufgebracht wird.

3. Verbindung nach Anspruch 1 oder 2, dadurch **gekennzeichnet**, daß die Festlegeeinrichtung zwischen den ersten und zweiten Hülsen zur unlösbaren Verbindung derselben vorgesehen ist.

4. Verbindung nach Anspruch 3, dadurch **gekennzeichnet**, daß der erste kreisförmige Ring von der äußeren Fläche einer ersten, kreisförmigen Ausnehmung (42) gebildet wird, welche nach außen offen ist, und die in der Nähe des Endes (41) des zweiten Mantels (39) vorgesehen ist, die Fläche der Ausnehmung (42) in der Nähe des ersten Mantels (38) mit dem letztgenannten verschweißt ist, und daß der zweite, kreisförmige Ring von der äußeren Fläche einer zweiten, kreisförmigen Ausnehmung (52) gebildet wird, welche in der Nähe des Endes (51) des fünften Mantels (49) nach außen offen ist, wobei die Fläche der Ausnehmung (52) in der Nähe des vierten Mantels (48) mit dem letztgenannten verschweißt ist.

5. Verbindung nach Anspruch 4, dadurch **gekennzeichnet**, daß die Festlegeeinrichtung von einem Verbindungsbund (57) gebildet wird, dessen Kanten jeweils in die ersten (42) und zweiten (52) kreisförmigen Ausnehmungen eingreifen.

6. Verbindung nach Anspruch 4 oder 5, dadurch **gekennzeichnet,** daß das über die erste, kreisförmige Ausnehmung (42) hinausgehende Ende (41) des zweiten Mantels (39) geringfügig konisch ausgebildet ist, um ein aufnehmendes Teil zu bilden, und daß das über die zweite, ringförmige Ausnehmung (52) hinausgehende Ende (51) des fünften Mantels (49) geringfügig konisch ausgebildet ist, um ein einsteckbares Teil zu bilden, welches in das aufnehmende Teil des zweiten Mantels (39) paßt.

7. Isolierte, flexible Leitungsverbindung mit inneren und äußeren, flexiblen Metallrohren nach einem der Ansprüche 3-6, bei der die ersten und zweiten Hülsen jeweils durch sechste (40) und siebente (50) Mäntel ergänzt sind, die Durchmesser haben, welche gleich den Außendurchmessern der äußeren Rohre (3, 8) sind, welche jeweils passend an den Enden der äußeren Rohr (3, 8) vorgesehen und fest an den letztgenannten angebracht sind, bei der die zweiten (39) und die sechsten (40) Mäntel konzentrisch und über Querstücke (44, 45) verbunden sind und die fünften (49) und siebenten (50) Mäntel konzentrisch und über Querstücke (53, 54) verbunden sind, dadurch **gekennzeichnet**, daß die freien Enden des sechsten (40) und siebenten (50) Mantels in einer Querebene liegen, welche jeweils die zweiten (39) und fünften (49) Mäntel auf der Seite der ersten (42) und zweiten (52) kreisförmigen Ausnehmungen schneiden, und daß eine Festlegeeinrichtung vorgesehen ist, welche eine integrale Verbindung der sechsten und siebenten Mäntel gestattet.

8. Verbindung nach Anspruch 7, dadurch **gekennzeichnet**, daß die Festlegeeinrichtung ein zweiter Verbindungsbund (59) ist, dessen Ränder jeweils in dritte (47) und vierte (56) kreisförmige Ausnehmungen eingreifen, die jeweils nach außen offen und in der Nähe der Enden der sechsten (40) und siebenten (50) Mäntel vorgesehen sind.

9. Verbindung nach Anspruch 1 oder 2, dadurch **gekennzeichnet**, daß an der Verbindung der Querstücke (20, 21 oder 31, 32) und den jeweiligen sechsten und siebenten Mänteln (14 oder 27) die flexiblen Metallrohre (3 oder 8) zwischen den Fußteilen der Querstücke und den Mänteln eingeklemmt sind.

10. Verbindung nach einem der Ansprüche 1-9, dadurch **gekennzeichnet**, daß die ersten und dritten Mäntel (12 und 19) einstückig ausgelegt sind.

## Claims

1. An insulated, metal and flexible smoke conduit joint with inner flexible metal pipe (2) and outer flexible metal pipe (3) formed by male ferrules and female ferrules respectively fixed on the ends of the insulated smoke conduits to be connected, characterised in that the inner male ferrule comprises a first sleeve (38) formed by a first metal shell (12) of diameter equal to the inner diameter of an inner flexible metal tube (2) and a second metal shell (13) concentric with the first shell (12) and the diameter of which is equal to the outer diameter of the inner flexible tube (2), the first and second shells (12, 13) being at their ends turned towards the female ferrule made integral with one another by a first circular ring, means being provided for fixing the corresponding end of the said tube in the first sleeve, the male ferrule being complemented by a third shell (19) of slight converging conicity extending the first shell (12) towards the outside, the inner female ferrule of which comprises a second sleeve formed by a fourth shell (25) of the same conicity as the third shell (19) but diverging, the minimum diameter of which is equal to the inner diameter of the inner flexible metal pipe (7) and a fifth shell (26) the diameter of which is equal to the outer diameter of the inner flexible pipe (7), the fourth and fifth shells (25, 26) being at their ends turned towards the male ferrule made integral with one another by a second circular ring (29) and means being provided for fixing the corresponding end of the pipe (7) in the second sleeve, sixth and seventh shells (14, 27) with diameter equal to the outer diameter of the outer pipes (3, 8) being respectively fitted on the ends of the outer pipes (3, 8) and fixed to the latter, the second and the sixth shells (13, 14) being concentric and connected by cross-pieces (20, 21) and the fifth and the seventh shell (26, 27) being concentric and connected by cross-pieces (31, 32).

2. A joint according to claim 1, characterised in that the sixth shell (14) has its free edge (32) in the form of a cone diverging ovr a short length and the seventh shell (27) has its free edge (33) in the form of a cone converging likewise over a short length, a circular boss (35) being provided on the seventh shell (27) behind the conical part (33), locking means being constituted by a circular collar (37) keeping brought together the rear of the said boss (35) of the seventh shell (27) and the surface of the diverging outer cone (22) which is applied to the outer surface of the converging cone (33).

3. A joint according to claim 1 or 2, characterised in that fixing means are provided between the said first and second sleeves to render them indissociable.

4. A joint according to claim 3, characterised in that the said first circular ring is constituted by the outer surface of a first circular groove (42) open outwards, near the end (41) of the second shell (39), the surface of the groove (42) adjacent to the first shell (38) being welded to the latter and the said second circular ring is constituted by the outer surface of a second circular groove (52) open outwards near the end (51) of the fifth shell (49), the surface of the groove (52) adjacent to the fourth shell (48) being welded to the latter.

5. A joint according to claim 4, characterised in that the said fixing means are constituted by a joining collar (57) the edges of which respectively engage in the said first (42) and second (52) circular grooves.

6. A joint according to claim 4 or 5, characterised in that beyond the first circular groove (42), the end (41) of the second shell (39) is slightly conical to form a female part and in that beyond the second circular groove (52), the end (51) of the fifth shell (49) is slightly conical to form a male part which fits in the said female part of the second shell (39).

7. An insulated flexible conduit joint with inner and outer flexible metal tubes according to one of the claims 3 to 6 in which the said first and second sleeves are respectively completed by the sixth (40) and seventh (50) shells with diameters equal to the outer diameters of the outer tubes (3, 8) which are respectively fitted on the ends of the outer tubes (3, 8) and fixed on the latter, the second (39) and sixth (40) shells being concentric and connected by cross-pieces (44, 45) and the fifth (49) and seventh shells (50) being concentric and connected by cross-pieces (53, 54), characterised in that the free ends of the sixth (40) and seventh (50) shells are in transverse planes which cut respectively the second (39) and fifth (49) on this side of the first (42) and second (52) circular grooves, fixing means being provided to make the sixth and seventh shells integral.

8. A joint according to claim 7, characterised in that the said fixing means are a second joining collar (59) the edges of which engage respectively in third (47) and fourth (56) circular grooves open outwards respectively provided near the ends of the said sixth (40) and seventh (50) shells.

9. A joint according to claim 1 or 2, characterised in that the joining of the cross-pieces (20, 21 or 31, 32) and respectively of the sixth and seventh shells (14 or 27), the flexible metal pipes (3 or 8) are squeezed between the feet of the cross-pieces and the said shells.

10. A joint according to one of the claims 1 to 9, characterised in that the first and third shells (12 and 19) are in one piece.

FIG.1

FIG. 2

FIG. 3

FIG. 4

FIG.5

FIG.6

FIG.7

FIG.8